# EUROPÄISCHE PATENTANMELDUNG

(11) **EP 3 106 908 A1**
(43) Veröffentlichungstag der Anmeldung: **21.12.2016**
(21) Anmeldenummer: 16170689.0
(22) Anmeldetag: 20.05.2016
(51) Int. Cl.: G02B 6/44, H02G 15/013

(54) **DICHTMODUL**

(30) Priorität: 15.06.2015 DE 102015109539
(71) Anmelder: Reichle & De-Massari AG, 8620 Wetzikon (CH)
(72) Erfinder: Izu, Hugo Diaz, 8620 Wetzikon (CH); Di Domenico, Maurizio, 8306 Brüttisellen (CH)
(74) Vertreter: Daub, Thomas

(57) **Zusammenfassung**

Die Erfindung geht aus von einem Dichtmodul, insbesondere einem Kabelkontaktierungswitterungsschutzdichtmodul, welches dazu vorgesehen ist, zumindest einen länglichen Körper (12), insbesondere zumindest ein Einblasrohr(38), zumindest teilweise aufzunehmen und zumindest abschnittsweise zumindest im Wesentlichen komplett in Umfangsrichtung (14) zu umschließen, mit einer Dichtmoduleinheit (16), die zumindest einen Aufnahmebereich (18) umfasst, welcher dazu vorgesehen ist, den zumindest einen länglichen Körper (12) aufzunehmen.

Es wird vorgeschlagen, dass das Dichtmodul zumindest einen Dichtungskörper (20) aufweist, welcher zumindest teilweise in dem zumindest einen Aufnahmebereich (18) angeordnet und dazu vorgesehen ist, den länglichen Körper (12) an zumindest einer Stirnseite (22) zumindest im Wesentlichen abzudichten.

## Beschreibung

### Stand der Technik

Die Erfindung betrifft ein Dichtmodul nach dem Oberbegriff des Anspruchs 1.

Aus der WO 95/24756 ist ein Dichtmodul bekannt, welches dazu vorgesehen ist, einen oder mehrere längliche Körper aufzunehmen und in Umfangsrichtung zu umschließen und abzudichten. Das Dichtmodul umfasst eine Dichtmoduleinheit, welche Aufnahmebereiche aufweist, die dazu vorgesehen sind, jeweils einen länglichen Körper aufzunehmen.

Die Aufgabe der Erfindung besteht insbesondere darin, ein gattungsgemäßes Dichtmodul mit verbesserten Eigenschaften hinsichtlich einer Abdichtung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Dichtmodul, insbesondere einem Kabelkontaktierungswitterungsschutzdichtmodul, welches dazu vorgesehen ist, zumindest einen länglichen Körper, insbesondere zumindest ein Einblasrohr, zumindest teilweise aufzunehmen und zumindest abschnittsweise zumindest im Wesentlichen komplett in Umfangsrichtung zu umschließen, mit einer Dichtmoduleinheit, die zumindest einen Aufnahmebereich umfasst, welcher dazu vorgesehen ist, den zumindest einen länglichen Körper aufzunehmen.

Es wird vorgeschlagen, dass das Dichtmodul zumindest einen Dichtungskörper aufweist, welcher zumindest teilweise in dem zumindest einen Aufnahmebereich angeordnet und dazu vorgesehen ist, den länglichen Körper an zumindest einer Stirnseite zumindest im Wesentlichen abzudichten. Unter "vorgesehen" soll insbesondere speziell ausgestaltet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "länglichen Körper" soll insbesondere ein Köper verstanden werden, der eine Länge aufweist, die zumindest doppelt, vorteilhaft zumindest viermal und vorzugsweise zumindest achtmal so groß ist wie dessen Durchmesser, der insbesondere quer zur Länge gemessen ist. Insbesondere sind Ausgestaltungen des länglichen Körpers als Rohr, insbesondere als Einblasrohr, als Schlauch, als Kabel, insbesondere als Glasfaserkabel, und/oder als Blindstopfen denkbar.

Unter "abschnittsweise" soll in diesem Zusammenhang insbesondere verstanden werden, dass der längliche Körper, in einer Längsrichtung des länglichen Körpers betrachtet, entlang eines Teils der gesamten Erstreckung des länglichen Körpers umschlossen ist. Unter "zumindest im Wesentlichen komplett umschlossen" soll in diesem Zusammenhang insbesondere verstanden werden, dass die Dichtmoduleinheit den länglichen Körper in zumindest einer Ebene über einen Winkelbereich von insbesondere zumindest 270°, vorzugsweise zumindest 300°, bevorzugt zumindest 330° und besonders bevorzugt von 360° umgibt. In einem besonders bevorzugten Ausführungsbeispiel liegt die Dichteinheit in einem montierten Zustand zumindest teilweise über zumindest nahezu einen kompletten Umfang direkt an dem länglichen Körper an. Die Dichtmoduleinheit ist vorzugsweise dazu vorgesehen, die länglichen Körper über eine Länge hinweg, die insbesondere zumindest gleich groß, vorzugsweise zumindest doppelt so groß und besonders bevorzugt zumindest dreimal so groß wie ein Durchmesser des länglichen Körpers ausgebildet ist und/oder die insbesondere zumindest 2 cm, bevorzugt zumindest 3,5 cm und vorzugsweise zumindest 5 cm beträgt und/oder die insbesondere maximal 10 cm, vorzugsweise maximal 8 cm und besonders bevorzugt maximal 6 cm beträgt zu umschließen. Die Dichtmoduleinheit ist vorzugsweise dazu vorgesehen, den länglichen Körper zumindest in einer Längsrichtung zumindest teilweise, vorzugsweise zumindest zu einem Großteil und besonders bevorzugt vollständig abzudichten und insbesondere ein Eindringen von Wasser und/oder Feuchtigkeit zumindest teilweise, vorzugsweise zumindest zu einem Großteil und besonders bevorzugt vollständig zu verhindern.

Insbesondere ist der längliche Körper in einer Montagerichtung in die Aufnahmebereiche der Dichtmoduleinheit einsetzbar, welche sich senkrecht zu einer Längsrichtung des länglichen Körpers erstreckt. Unter einer "Montagerichtung" soll in diesem Zusammenhang insbesondere eine Richtung verstanden werden, entlang der längliche Körper in den Aufnahmebereich der Dichtmoduleinheit einsetzbar ist. Unter einer "Längsrichtung der länglichen Körper" soll in diesem Zusammenhang insbesondere eine Haupterstreckungsrichtung der länglichen Körper jeweils in einem in der Dichtmoduleinheit eingesetzten Zustand in einem Bereich, der zumindest teilweise von der Dichtmoduleinheit umschlossen ist, verstanden werden. Insbesondere kann das Dichtmodul eine Mehrzahl von Aufnahmebereichen aufweisen, welche jeweils zur Aufnahme eines länglichen Körpers vorgesehen sind. Insbesondere ist die Dichtmoduleinheit aufklappbar ausgebildet. Unter "aufklappbar" soll in diesem Zusammenhang insbesondere verstanden werden, dass die Dichtmoduleinheit zumindest zwei Bereiche aufweist, welche in einem zusammengeklappten Zustand als Lagen aufeinanderliegen und die an einer Seite schwenkbar miteinander verbunden ausgebildet sind. Unter einem "Dichtungskörper" soll in diesem Zusammenhang insbesondere ein Körper verstanden werden, welcher insbesondere zumindest im Wesentlichen aus einem plastisch verformbaren und/oder elastisch verformbaren Dichtungsmaterial besteht. Insbesondere liegt der Dichtungskörper in zumindest einem montierten Zustand unmittelbar an der Stirnseite des länglichen Körpers an. Vorzugsweise könnte der Dichtungskörper dazu vorgesehen sein, den länglichen Körper an der Stirnseite derart abzudichten, dass ein Eindringen eines Fluids, insbesondere von Wasser und/oder Feuchtigkeit, zu zumindest 75 %, vorzugsweise zu zumindest 85 % und besonders bevorzugt zu zumindest 95 % verhindert und/oder blockiert ist.

Durch eine derartige Ausgestaltung kann ein gattungsgemäßes Dichtmodul mit verbesserten Eigenschaften hinsichtlich einer Abdichtung bereitgestellt werden. Insbesondere kann durch den Dichtungskörper eine vorteilhafte stirnseitige Abdichtung eines in dem Dichtmodul angeordneten länglichen Körpers, insbesondere eines röhrenförmigen länglichen Körpers, erreicht werden.

Vorteilhaft ist der Dichtungskörper als Hohlkörper ausgebildet. Der Dichtungskörper könnte beispielsweise als Hohlpyramide, als Hohlkonus und/oder als Hohlquader ausgebildet sein. Bevorzugt wird vorgeschlagen, dass der Dichtungskörper zumindest im Wesentlichen als ein Hohlzylinder ausgebildet ist. Der Dichtungskörper könnte dabei insbesondere mit einem Volumenanteil von höchstens 20 % und bevorzugt von höchstens 10 % von einem Hohlzylinder abweichen. Unter einem "Hohlzylinder" soll in diesem Zusammenhang insbesondere ein gerader Zylinder, vorteilhaft Kreiszylinder, verstanden werden, welcher eine sich entlang einer Zylinderachse erstreckende Ausnehmung vorteilhaft mit einer zumindest im Wesentlichen kreisförmigen Grundfläche aufweist. Insbesondere ist ein Innendurchmesser des Hohlzylinders gleich groß oder vorzugsweise kleiner als ein Durchmesser des länglichen Körpers. Insbesondere ist ein Außendurchmesser des Holzylinders gleich groß oder vorzugsweise größer als ein Durchmesser des länglichen Körpers. Insbesondere bei einem als Einblasrohr ausgebildeten länglichen Körper kann hierdurch eine vorteilhaft einfache Einführung und/oder Durchführung eines elektrischen und/oder optischen Leiters erfolgen.

Des Weiteren wird vorgeschlagen, dass der Dichtungskörper geschlitzt ausgebildet ist. Darunter, dass der Dichtungskörper "geschlitzt ausgebildet ist", soll insbesondere verstanden werden, dass eine Wand des Dichtungskörper zumindest eine schlitzartige Ausnehmung aufweist. Die schlitzartige Ausnehmung erstreckt sich insbesondere über eine gesamte Materialstärke der Dichtungskörperwand. Insbesondere weist der Dichtungskörper eine zumindest im Wesentlichen parallel zu einer Mittelachse des Dichtungskörpers verlaufende schlitzförmige Ausnehmung auf. Insbesondere verläuft die schlitzförmige Ausnehmung in einem montierten Zustand des Dichtungskörpers zumindest im Wesentlichen parallel zu einer Montagerichtung des länglichen Körpers. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Alternativ kann der Dichtungskörper zumindest eine schraubenförmig umlaufende schlitzartige Ausnehmung aufweisen. Hierdurch kann eine vorteilhafte Dichtwirkung des Dichtungskörpers erreicht werden. Insbesondere kann ein zumindest teilweise in einen Innendurchmesser des Dichtungskörpers eingeführtes und/oder ein durch den Innendurchmesser des Dichtungskörpers hindurchgeführtes Element vorteilhaft von dem Dichtungskörper umschlossen werden.

Ferner wird vorgeschlagen, dass der Dichtungskörper zumindest im Wesentlichen aus einem Gel besteht. Darunter, dass der Dichtungskörper "zumindest im Wesentlichen aus einem Gel besteht" soll in diesem Zusammenhang insbesondere verstanden werden, dass der Dichtungskörper zumindest zu 85 %, vorteilhaft zu zumindest 90 %, vorzugsweise zu zumindest 95 % und besonders bevorzugt vollständig aus einem Gel besteht. Insbesondere weist der Dichtungskörper eine formstabile Hülle auf, welche von einem zähflüssigen zumindest gelartigen Material gefüllt ist. Insbesondere sind die Hülle und das Material darin von einem zumindest weitgehend identischen Material gebildet, wobei das zähflüssige, gelartige Material an die Hülle bildenden Grenzflächen durch einen chemischen und/oder physikalischen Prozess in einen festen Zustand übergeführt ist. Insbesondere ist der Dichtungskörper von zumindest einem Polymer, insbesondere einem Blockcopolymer SEBS, und/oder einem thermoplastischen Polymer, beispielsweise Polyurethan, gebildet. Hierdurch kann insbesondere eine vorteilhaft hohe Kompressibilität und/oder eine vorteilhaft hohe Dichtfähigkeit des Dichtungskörpers erreicht werden.

In einer bevorzugten Ausgestaltung der Erfindung wird vorgeschlagen, dass das Dichtmodul zumindest ein Anpresselement aufweist, welches dazu vorgesehen ist, den Dichtungskörper an die Stirnseite des länglichen Körpers anzupressen. Unter einem "Anpresselement" soll in diesem Zusammenhang insbesondere ein Element verstanden werden, welches dazu vorgesehen ist, in zumindest einem montierten Zustand eine in Richtung der Stirnseite des länglichen Körpers gerichtete Kraft auf den Dichtungskörper auszuüben. Insbesondere verläuft eine Hauptwirkrichtung der von dem Anpresselement auf den Dichtungskörper ausgeübten Kraft zumindest im Wesentlichen parallel zu der Montagerichtung des länglichen Körpers. Hierdurch kann ein vorteilhafter Kontakt zwischen dem Abdichtungskörper und der Stirnseite des länglichen Körpers erreicht werden, wodurch eine Dichtwirkung vorteilhaft gesteigert werden kann.

Des Weiteren wird vorgeschlagen, dass das Anpresselement zumindest teilweise formschlüssig und/oder stoffschlüssig mit dem Dichtungskörper verbunden ist. Unter "formschlüssig verbunden" soll in diesem Zusammenhang insbesondere verstanden werden, dass aneinanderliegende Flächen von miteinander formschlüssig verbundenen Bauteilen der zumindest einen ersten Dichteinheit und der zumindest einen zweiten Dichteinheit eine in Normalenrichtung der Flächen wirkende Haltekraft aufeinander ausüben. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Hierdurch kann eine vorteilhaft zuverlässige Verbindung zwischen dem Anpresselement und dem Dichtungskörper und somit eine vorteilhaft zuverlässige Krafteinleitung in den Dichtungskörper erreicht werden.

Ferner wird vorgeschlagen, dass das Anpresselement zumindest ein Eingriffselement aufweist, welcher dazu vorgesehen ist, zumindest teilweise in den Dichtungskörper einzugreifen. Unter einem "Eingriffselement" soll in diesem Zusammenhang insbesondere ein Element verstanden werden, welches dazu vorgesehen ist, das Anpresselement und den Dichtungskörper relativ zueinander auszurichten. Insbesondere ist das Eingriffselement dazu vorgesehen eine Mittelachse des Anpresselements fluchtend zu einer Mittelachse des Dichtungskörpers auszurichten. Ein maximaler Außendurchmesser des Eingriffselements entspricht insbesondere zumindest im Wesentlichen einem Innendurchmesser des Dichtungskörpers. Hierdurch kann eine vorteilhaft genaue relative Ausrichtung zwischen dem Anpresselement und dem Dichtungskörper erreicht werden. Ferner kann eine Bewegung des Dichtungskörpers senkrecht zu einer Montagerichtung des länglichen Körpers vorteilhaft verhindert werden.

Insbesondere kann das Anpresselement einstückig mit der Dichtmoduleinheit ausgebildet sein. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise ist das Anpresselement zumindest teilweise formschlüssig mit der Dichtmoduleinheit verbunden. Insbesondere weist das Anpresselement zumindest ein Rastmittel auf, welches dazu vorgesehen ist, das Anpresselement formschlüssig mit der Dichtmoduleinheit zu verbinden. Hierdurch kann das Anpresselement vorteilhaft einfach an der Dichtmoduleinheit angeordnet werden.

Des Weiteren wird vorgeschlagen, dass das Dichtmodul zumindest ein Halteelement aufweist, welches zumindest zu einer Befestigung des länglichen Körpers vorgesehen ist. Insbesondere ist das Befestigungselement dazu vorgesehen, den länglichen Körper kraftschlüssig und/oder formschlüssig zu befestigen. Insbesondere ist das Halteelement dazu vorgesehen, den länglichen Körper in einem montierten Zustand in Umfangsrichtung zumindest teilweise zu umschließen. Das Halteelement weist insbesondere zumindest zwei federelastische Haltearme auf, welche den länglichen Körper in einem montierten Zustand zumindest teilweise umgreifen. Der längliche Körper kann insbesondere zumindest eine Befestigungsausnehmung aufweisen, in welche das Halteelement in einem montierten Zustand zumindest teilweise eingreift. Dadurch kann eine vorteilhaft einfache Befestigung des zumindest einen länglichen Körpers erreicht werden.

Insbesondere kann das Halteelement einstückig mit der Dichtmoduleinheit ausgebildet sein. Vorzugsweise ist das Halteelement zumindest teilweise formschlüssig mit der Dichtmoduleinheit verbunden. Insbesondere weist das Halteelement zumindest ein Verbindungsmittel auf, welches dazu vorgesehen ist, das Halteelement formschlüssig mit der Dichtmoduleinheit zu verbinden. Hierdurch kann das Halteelement vorteilhaft einfach an der Dichtmoduleinheit angeordnet werden.

Ferner wird vorgeschlagen, dass die Dichtmoduleinheit ein einstückig ausgebildetes Dichtungselement umfasst, welches dazu vorgesehen ist, den länglichen Körper zumindest abschnittsweise zumindest im Wesentlichen vollständig in Umfangsrichtung zu umschließen. Unter einem "Dichtungselement" soll in diesem Zusammenhang insbesondere ein Element verstanden werden, welches insbesondere zumindest im Wesentlichen aus einem plastisch verformbaren und/oder elastisch verformbaren Dichtungsmaterial besteht. Insbesondere besteht das Dichtungselement zumindest im Wesentlichen aus einem Gel. Darunter, dass das Dichtungselement "zumindest im Wesentlichen aus einem Gel besteht" soll in diesem Zusammenhang insbesondere verstanden werden, dass das Dichtungselement zumindest zu 85 %, vorteilhaft zu zumindest 90 %, vorzugsweise zu zumindest 95 % und besonders bevorzugt vollständig aus einem Gel besteht. Insbesondere weist das Dichtungselement eine formstabile Hülle auf, welche von einem zähflüssigen zumindest gelartigen Material gefüllt ist. Insbesondere sind die Hülle und das Material darin von einem zumindest weitgehend identischen Material gebildet, wobei das zähflüssige, gelartige Material an die Hülle bildenden Grenzflächen durch einen chemischen und/oder physikalischen Prozess in einen festen Zustand übergeführt ist. Insbesondere ist das Dichtungselement von zumindest einem Polymer, insbesondere einem Blockcopolymer SEBS, und/oder einem thermoplastischen Polymer, beispielsweise Polyurethan, gebildet. Insbesondere können das Dichtungselement und der Dichtungskörper zumindest im Wesentlichen aus einem identischen Gel bestehen. Das Dichtungselement ist insbesondere verschieden zu dem Dichtungskörper ausgebildet. Das Dichtungselement bildet insbesondere zumindest teilweise den Aufnahmebereich auf. Unter "zumindest im Wesentlichen komplett umschließen" soll in diesem Zusammenhang insbesondere verstanden werden, dass das Dichtungselement den länglichen Körper in einem montierten Zustand auf zumindest einer Ebene über einen Winkelbereich von insbesondere zumindest 180 °, vorzugsweise zumindest 270 ° und besonders bevorzugt von 360 ° umgibt. Hierdurch kann eine vorteilhaft zuverlässige Befestigung und eine vorteilhaft gute Abdichtung des länglichen Körpers in einem montierten Zustand im Bereich des Dichtungselements erreicht werden.

Des Weiteren wird vorgeschlagen, dass die Dichtmoduleinheit zumindest zwei Schalungselemente aufweist, welche dazu vorgesehen sind, das Dichtungselement auf zwei sich gegenüberliegenden Seiten einzufassen. Die Schalungselemente sind vorzugsweise fest, insbesondere stoffschlüssig, mit dem Dichtungselement verbunden. Dadurch kann eine vorteilhaft kompakte und bevorzugt stabile Ausgestaltung der Dichtmoduleinheit erreicht werden.

Ferner wird vorgeschlagen, dass das Anpresselement insbesondere zumindest teilweise formschlüssig mit einem der Schalungselemente verbunden ist. Vorzugsweise ist das Halteelement insbesondere zumindest teilweise formschlüssig mit einem der Schalungselemente verbunden. Insbesondere sind das Anpresselement und das Halteelement mit verschiedenen Schalungselementen verbunden. Hierdurch kann eine vorteilhafte einfache und/oder mechanisch stabile Befestigung des Anpresselements und/oder des Halteelements an der Dichtmoduleinheit erfolgen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Dichtmoduls in geöffnetem Zustand mit einem als Einblasrohr ausgebildeten eingelegten länglichen Körper und
- Fig. 2: das Dichtmodul aus Figur 1 in einer Explosionsdarstellung.

### Beschreibung des Ausführungsbeispiels

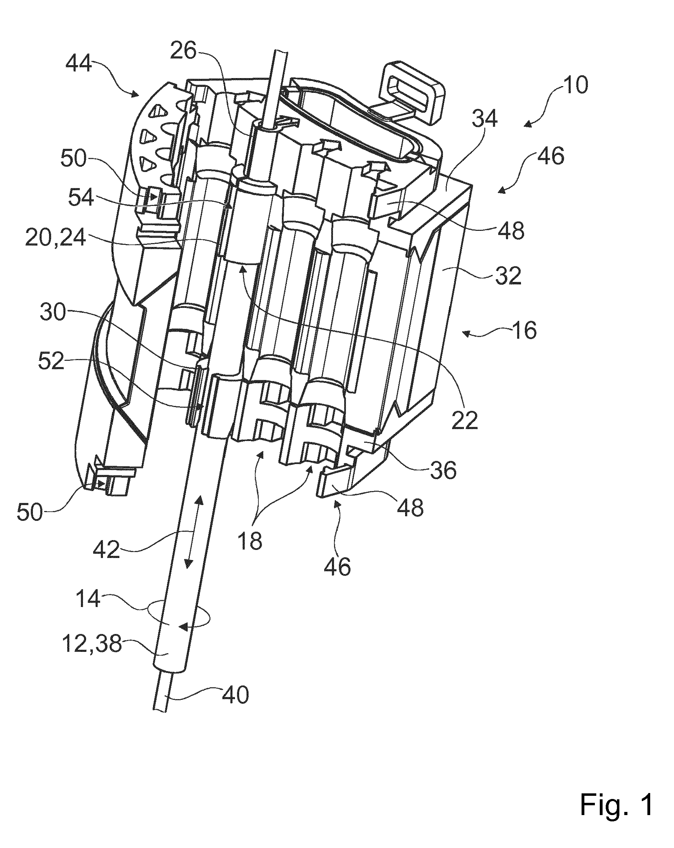

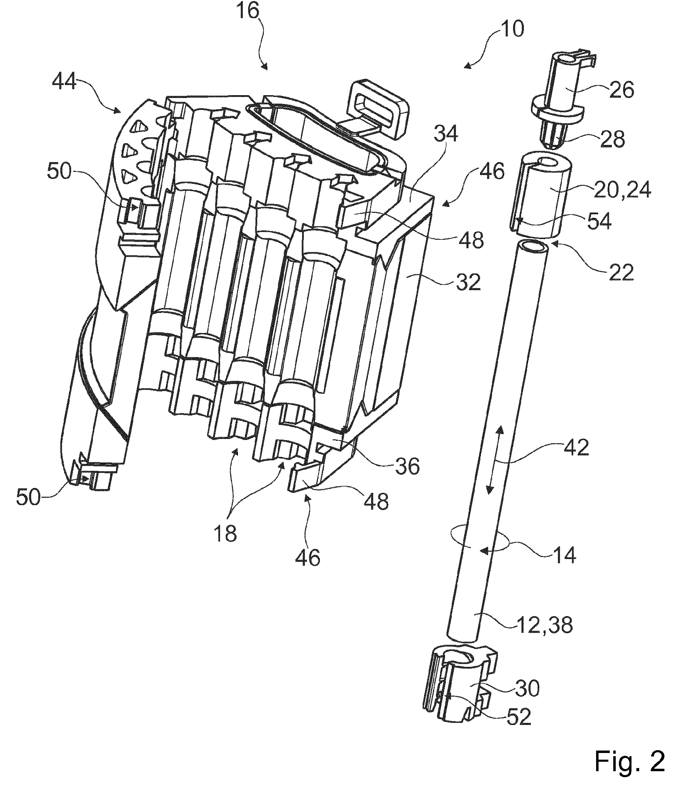

Figur 1 zeigt eine perspektivische Ansicht eines Dichtmoduls 10 in einem geöffneten Zustand. Figur 2 zeigt das Dichtmodul 10 in einer Explosionsdarstellung. Das Dichtmodul 10 ist als ein Kabelkontaktierungswitterungsschutzdichtmodul ausgebildet. Insbesondere ist das Dichtmodul 10 zu einer Verwendung mit einem nicht dargestellten Kabelkontaktierungswitterungsschutz vorgesehen, welcher insbesondere eine Mehrzahl von Dichtmodulen 10 aufnehmen kann und dazu vorgesehen ist, eine Kontaktierungsanordnung zur Verbindung von Kabeln, insbesondere von Glasfaserkabeln, und/oder zur Halterung von Verbindungstellen zwischen Kabeln, insbesondere Glasfaserkabeln, witterungsgeschützt aufzunehmen und/oder zu bilden. Insbesondere ist der Kabelkontaktierungswitterungsschutz dazu vorgesehen in ungeschützten Umgebungen, insbesondere im Freien, im Boden, in Montageschächten, an Kabelmasten und/oder vergleichbaren Orten eingesetzt zu werden. Das Dichtmodul 10 ist dazu vorgesehen, mehrere längliche Körper 12 aufzunehmen und abschnittsweise in Umfangsrichtung 14 vollständig zu umschließen. Das dargestellte Dichtmodul 10 ist dazu vorgesehen, bis zu vier längliche Körper 12 aufzunehmen. Es sind jedoch auch Dichtmodule denkbar, welche dazu vorgesehen sind, eine von vier abweichende Anzahl von länglichen Körpern aufzunehmen. Aus Übersichtsgründen ist hier jedoch lediglich ein länglicher Körper 12 dargestellt. Die länglichen Körper 12 sind als Einblasrohre 38 ausgebildet. Die Einblasrohre 38 sind dazu vorgesehen, eine Glasfaser und/oder ein Glasfaserbündel 40 aufzunehmen.

Das Dichtmodul 10 umfasst eine Dichtmoduleinheit 16, die hier beispielhaft vier Aufnahmebereiche 18 umfasst. Alternativ sind jedoch auch Dichtmoduleinheiten denkbar, welche eine von vier abweichende Anzahl von Aufnahmebereichen umfassen. Die Aufnahmebereiche 18 sind dazu vorgesehen, jeweils einen länglichen Körper 12 aufzunehmen. Die Aufnahmebereiche 18 sind reihenförmig nebeneinander angeordnet. Die Aufnahmebereiche 18 weisen eine längliche Form auf. Die Aufnahmebereiche 18 sind rinnenförmig ausgebildet. Das Dichtmodul 10 weist für jeden länglichen Körper 12 jeweils einen Dichtungskörper 20 auf. Die Dichtungskörper 20 sind in einem montierten Zustand jeweils in einem Aufnahmebereich 18 angeordnet. Die Dichtungskörper 20 sind dazu vorgesehen, die länglichen Körper 12 jeweils an einer Stirnseite 22 abzudichten. Die Dichtungskörper 20 sind jeweils als Hohlzylinder 24 ausgebildet. Die Dichtungskörper 20 sind geschlitzt ausgebildet. Die Dichtungskörper 20 weisen jeweils entlang ihrer Rotationsachse einen Schlitz 54 auf. Der Schlitz 54 erstreckt sich jeweils entlang einer gesamten Erstreckung des jeweiligen Dichtungskörpers 20 parallel zur jeweiligen Rotationsachse. Die Dichtungskörper 20 bestehen jeweils aus einem Gel. Die Dichtungskörper 20 sind elastisch verformbar ausgebildet. Das Dichtmodul 10 umfasst ferner Anpresselemente 26, welche dazu vorgesehen sind jeweils einen Dichtungskörper 20 an eine Stirnseite 22 eines länglichen Körpers 12 anzupressen. Die Anpresselemente 26 sind jeweils mit einem der Dichtungskörper 20 formschlüssig und/oder stoffschlüssig verbunden. Die Anpresselemente 26 weisen jeweils ein Eingriffselement 28 auf, welche dazu vorgesehen sind, in jeweils einen Dichtungskörper 20 einzugreifen. Die Anpresselemente 26 sind formschlüssig mit der Dichtmoduleinheit 16 verbunden.

Die Dichtmoduleinheit 16 umfasst ein einstückig ausgebildetes Dichtungselement 32. Das Dichtungselement 32 ist dazu vorgesehen, die länglichen Körper 12 abschnittsweise vollständig in Umfangsrichtung 14 zu umschließen. Insbesondere ist das Dichtungselement 32 dazu vorgesehen, die länglichen Körper 12 in einem montierten Zustand in Umfangsrichtung 14 abschnittsweise vollständig zu kontaktieren und dadurch die länglichen Körper 12 entlang deren Längsrichtung 42 über die Erstreckung des Dichtungselements 32, senkrecht zur Umfangsrichtung 14, wasserdicht abzuschließen bzw. abzudichten. Das Dichtungselement 32 ist aus einem Gel gebildet. Insbesondere können das Dichtungselement 32 und die Dichtungskörper 20 aus einem identischen Gel gebildet sein. Das Dichtungselement 32 ist elastisch verformbar ausgebildet. Ferner weist die Dichtmoduleinheit 16 zwei Schalungselemente 34, 36 auf. Die Schalungselemente 34, 36 sind dazu vorgesehen, das Dichtungselement 32 auf zwei sich gegenüberliegenden Seiten einzufassen. Die Schalungselemente 34, 36 schließen senkrecht zur Umfangsrichtung 14 betrachtet, an gegenüberliegenden Enden des Dichtungselements 32 an. Die Schalungselemente 34,36 sind jeweils stoffschlüssig mit dem Dichtungselement 32 verbunden. Die Schalungselemente 34, 36 sind von einem festen Kunststoff, beispielsweise Polyethylen, gebildet. Die Schalungselemente 34, 36 überdecken eine Querschnittsfläche der Enden des Dichtungselements 32 vollständig.

Das Dichtungselement 32 und die Schalungselemente 34, 36 weisen jeweils Teilabschnitte der Aufnahmebereiche 18 auf, welche sich jeweils zur Ausbildung der Aufnahmebereiche 18 ergänzen.

Die Dichtmoduleinheit 16 ist dazu vorgesehen, zu einer Montage der länglichen Körper 12 aufgeklappt zu werden. Das Dichtungselement 32 und die Schalungselemente 34, 36 sind aufklappbar ausgebildet. Das Dichtungselement 32 und die Schalungselemente 34, 36 weisen einseitig jeweils ein Scharnier 44 auf. Auf einer den Scharnieren 44 gegenüberliegenden Seite weisen die Schalungselemente 34, 36 jeweils eine Rasteinheit 46 auf. Die Rasteinheiten 46 sind dazu vorgesehen, die Dichtmoduleinheit 16 zu verschließen und ein ungewolltes Aufklappen der Schalungselemente 34, 36 sowie des mit den Schalungselementen 34, 36 verbundenen Dichtungselements 32 zu vermeiden. Die Rasteinheit 46 umfassen jeweils einen Rasthaken 48 und eine mit dem Rasthaken 48 korrespondierend ausgebildete Rastausnehmung 50.

Die Dichtmoduleinheit 16 umfasst für jeden der Aufnahmebereiche 18 jeweils ein Halteelement 30, das zu einer formschlüssigen Befestigung jeweils eines länglichen Körpers 12 vorgesehen ist. Jedem der Aufnahmebereiche 18 ist ein Halteelement 30 zugeordnet. Die Halteelemente 30 sind mit einem der Schalungselementen 36 verbunden. Alternativ ist es ebenso denkbar ein Halteelement einstückig mit einem Schalungselement auszubilden. Die Anpresselemente 26 sind mit einem weiteren der Schalungselementen 34 verbunden. Alternativ ist es ebenso denkbar Halteelemente und/oder Anpresselemente einstückig mit einem Schalungselement auszubilden Die länglichen Körper 12 werden in einem montierten Zustand jeweils von einem Halteelement 30 formschlüssig befestigt. Die Halteelemente 30 sind aus einem Kunststoff gebildet. Die Halteelemente 30 sind identisch ausgebildet. Die Halteelemente 30 sind jeweils zylindermantelförmig bzw. rohrförmig ausgebildet und weisen entlang einer Rotationsachse einen Schlitz 52 auf. Der Schlitz 52 erstreckt sich entlang einer gesamten Erstreckung des Halteelements 30 parallel zur Rotationsachse. Die Halteelemente 30 weisen einen C-förmigen Querschnitt auf. Die Halteelemente 30 weisen einen kreisringsektorförmigen Querschnitt auf.

## Patentansprüche

1. Dichtmodul, insbesondere Kabelkontaktierungswitterungsschutzdichtmodul, welches dazu vorgesehen ist, zumindest einen länglichen Körper (12), insbesondere zumindest ein Einblasrohr (38), zumindest teilweise aufzunehmen und zumindest abschnittsweise zumindest im Wesentlichen komplett in Umfangsrichtung (14) zu umschließen, mit einer Dichtmoduleinheit (16), die zumindest einen Aufnahmebereich (18) umfasst, welcher dazu vorgesehen ist, den zumindest einen länglichen Körper (12) aufzunehmen, **gekennzeichnet durch** zumindest einen Dichtungskörper (20), welcher zumindest teilweise in dem zumindest einen Aufnahmebereich (18) angeordnet und dazu vorgesehen ist, den länglichen Körper (12) an zumindest einer Stirnseite (22) zumindest im Wesentlichen abzudichten.

2. Dichtmodul nach Anspruch 1, **dadurch gekennzeichnet, dass** der Dichtungskörper (20) zumindest im Wesentlichen als ein Hohlzylinder (24) ausgebildet ist.

3. Dichtmodul nach Anspruch 1 oder 2, **dadurch gekennzeichnet, dass** der Dichtungskörper (20) geschlitzt ausgebildet ist.

4. Dichtmodul nach einem der vorhergehenden Ansprüche, **dadurch gekennzeichnet, dass** der Dichtungskörper (20) zumindest im Wesentlichen aus einem Gel besteht.

5. Dichtmodul nach einem der vorhergehenden Ansprüche, **gekennzeichnet durch** zumindest ein Anpresselement (26), welches dazu vorgesehen ist, den Dichtungskörper (20) an die Stirnseite (22) des länglichen Körpers (12) anzupressen.

6. Dichtmodul nach Anspruch 5, **dadurch gekennzeichnet, dass** das Anpresselement (26) zumindest teilweise formschlüssig und/oder stoffschlüssig mit dem Dichtungskörper (20) verbunden ist.

7. Dichtmodul nach Anspruch 5 oder 6, **dadurch gekennzeichnet, dass** das Anpresselement (26) zumindest ein Eingriffselement (28) aufweist, welches dazu vorgesehen ist, zumindest teilweise in den Dichtungskörper (20) einzugreifen.

8. Dichtmodul nach einem der Ansprüche 5 bis 7, **dadurch gekennzeichnet, dass** das Anpresselement (26) zumindest teilweise formschlüssig mit der Dichtmoduleinheit (16) verbunden ist.

9. Dichtmodul nach einem der vorhergehenden Ansprüche, **gekennzeichnet durch** zumindest ein Halteelement (30), welches zumindest zu einer Befestigung des länglichen Körpers (12) vorgesehen ist.

10. Dichtmodul nach Anspruch 9, **dadurch gekennzeichnet, dass** das Halteelement (30) zumindest teilweise formschlüssig mit der Dichtmoduleinheit (16) verbunden ist.

11. Dichtmodul nach einem der vorhergehenden Ansprüche, **dadurch gekennzeichnet, dass** die Dichtmoduleinheit (16) ein einstückig ausgebildetes Dichtungselement (32) umfasst, welches dazu vorgesehen ist, den länglichen Körper (12) zumindest abschnittsweise zumindest im Wesentlichen vollständig in Umfangsrichtung (14) zu umschließen.

12. Dichtmodul nach Anspruch 11, **dadurch gekennzeichnet, dass** die Dichtmoduleinheit (16) zumindest zwei Schalungselemente (34, 36) aufweist, welche dazu vorgesehen sind, das Dichtungselement (32) auf zwei sich gegenüberliegenden Seiten einzufassen.

13. Dichtmodul zumindest nach den Ansprüchen 5 und 12, **dadurch gekennzeichnet, dass** das Anpresselement (26) mit einem der Schalungselemente (34) verbunden ist.

14. Dichtmodul zumindest nach den Ansprüchen 9 und 12, **dadurch gekennzeichnet, dass** das Halteelement (30) mit einem der Schalungselemente (36) verbunden ist.

15. Dichtungskörper für ein Dichtmodul (10) nach einem der vorhergehenden Ansprüche.
